Europäisches Patentamt

European Patent Office

Office européen des brevets

(19)

(11) **EP 0 895 010 B1**

(12) **EUROPÄISCHE PATENTSCHRIFT**

(45) Veröffentlichungstag und Bekanntmachung des Hinweises auf die Patenterteilung:
**15.01.2003   Patentblatt 2003/03**

(51) Int Cl.[7]: **F16J 15/34**

(21) Anmeldenummer: **97810549.2**

(22) Anmeldetag: **31.07.1997**

(54) **Verfahren zum Ueberwachen des Zustands einer mechanischen Dichtung**

Method for monitoring the condition of a mechanical seal

Procédé pour contrôler l'état d'une garniture mécanique d'étanchéité

(84) Benannte Vertragsstaaten:
**DE FR GB NL**

(43) Veröffentlichungstag der Anmeldung:
**03.02.1999   Patentblatt 1999/05**

(73) Patentinhaber: **SULZER PUMPEN AG**
**CH-8401 Winterthur (CH)**

(72) Erfinder:
• **Holenstein, Anton, Dr.**
  **8422 Pfungen (CH)**

• **Milek, Janusz, Dr.**
  **8032 Zürich (CH)**
• **Birchler, Bernhard, Dr.**
  **8304 Wallisellen (CH)**

(74) Vertreter: **Sulzer Management AG**
**KS/Patente/0007**
**Zürcherstrasse 12**
**8401 Winterthur (CH)**

(56) Entgegenhaltungen:
**EP-A- 0 288 979        DE-A- 3 707 524**
**GB-A- 2 122 396**

**Beschreibung**

Die Erfindung betrifft ein Verfahren zum Überwachen des Zustands einer mechanischen Dichtung in einer mit einem rotierenden Teil versehenen Vorrichtung gemäss Oberbegriff des Anspruchs 1. Insbesondere betrifft die Erfindung ein solches Verfahren zum Überwachen des Zustands einer mechanischen Dichtung in einer Pumpe zur Förderung eines Fluids, die eine rotierende Welle aufweist.

Mechanische Dichtungen werden beispielsweise in Pumpen zur Wellenabdichtung verwendet, um ein Austreten des zu fördernden Fluids an der Welle, welche das Pumpenrad antreibt, zu vermeiden. Typischerweise sind solche Dichtungen als Gleit- oder Gleitringdichtungen zweiteilig ausgestaltet, wobei der eine Teil drehfest mit der im Betriebszustand rotierenden Welle verbunden ist und der andere Teil bezüglich des Pumpengehäuses gegen Rotationen gesichert ist, sodass die beiden Teile aneinander gleiten. Normalerweise ist eine solche Gleitdichtung in einem Kühlmedium gelagert, um die erzeugte Reibungswärme abzuführen. Dieses Kühlmedium kann entweder das zu fördernde Fluid sein, oder es kann ein separates Kühlmedium vorgesehen sein. Das Kühlmedium dient gleichzeitig zur Schmierung, indem es einen Schmierfilm zwischen den beiden aneinander gleitenden Teilen der Dichtung bildet, welcher wesentlich für die Funktion und die Lebensdauer der Dichtung ist.

Aufgrund ihrer hohen mechanischen Beanspruchung stellen solche mechanischen Dichtungen in Pumpen, wie sie beispielsweise in Raffinerien, chemischen Grossanlagen oder als Speisewasserpumpen in Kraftwerken verwendet werden, eines der kritischen Elemente dar. Ein Versagen solcher Dichtungen, beispielsweise durch Abreissen des Schmierfilms oder Trockenlauf, führt zu unerwarteten Ausfällen der Pumpe und somit häufig zu einem unvorhergesehenen Stillstand der gesamten Anlage. Die dadurch bedingten Produktionsausfälle sind unter wirtschaftlichen Aspekten äusserst nachteilig. Aber auch aus Umweltschutz- und sicherheitstechnischen Gründen, ist es wünschenswert, dass ein plötzliches Ausfallen der Pumpe aufgrund von Verschleiss, einer Fehlfunktion oder eines Schadens der Dichtung weitestgehend vermieden wird. Es ist daher ein Bedürfnis, den Zustand solcher Dichtungen im Betriebszustand ständig zu überwachen bzw. beurteilen zu können. Dies wird jedoch dadurch erschwert, dass es häufig nicht möglich ist, unter vertretbarem Aufwand eine visuelle Überwachung der Dichtung durchzuführen oder geeignete Sensoren direkt auf den gleitenden Teilen der mechanischen Dichtung zu installieren.

Es ist bekannt, z. B. aus der deutschen Patentschrift DE-C-37 07 524, anhand der HF-Schallemission im Frequenzbereich von 100 kHz bis mindestens 1 MHz, die durch das Gleiten der Dichtungsteile hervorgerufen wird, den Gleitzustand einer solchen Dichtung zu prüfen. Ein solches Verfahren beruht darauf, dass sich die Schallemission der Dichtung mit dem Zustand des Schmierfilms ändert. Wesentlich für das in der DE-C-37 07 524 vorgeschlagene Verfahren ist, dass der Hochfrequenz-Vibrationssensor zur Aufnahme der Schallemission der Dichtung an der Aussenseite des Maschinengehäuses angeordnet ist, also nicht in direktem Kontakt mit der Wellendichtung steht. Gemäss Lehre der DE-C-37 07 524 wird aus dem aus der akustischen Messung abgeleiteten Signal der Effektivwert, der Energiewert oder ein Zählwert bestimmt, dieser Wert über eine gewisse Zeitspanne akkumuliert und daraus eine Frequenz- oder eine Amplitudenverteilung ermittelt. Es wird dann beurteilt, ob die ermittelte Verteilung einem normalen Arbeiten der Dichtung entspricht.

Die DE-C-37 07 524 lehrt, das Ausgangssignal des Hochfrequenz-Vibrationssensor mittels eines Hochgeschwindigkeits-A/D-Konverters in ein digitales Signal umzuwandeln. Um bei einer angegebenen maximalen Frequenz von zwei MHz eine fehlerfreie Digitalisierung durchzuführen, muss der A/D-Konverter mit einer Taktfrequenz von mindestens vier MHz arbeiten. Hochgeschwindigkeits-A/D-Konverter, die mit einer solch hohen Digitalisierungsrate arbeiten, sind hoch spezialisierte Geräte, die gerätetechnisch aufwendig hergestellt werden und dementsprechend kostenintensive Komponenten darstellen. Auch die apparative Ausgestaltung für die Signalverarbeitung muss entsprechend schnell arbeiten können. Unter Berücksichtigung der Tatsache, dass in der Regel in grossindustriellen Anlagen mehrere mechanische Dichtungen einer kontinuierlichen und zuverlässigen Überprüfung ihres Gleitzustandes unterzogen werden sollen, ist die Verwendung dieser Hochgeschwindigkeits-A/D-Konverter und dieser hohen Taktfrequenzen unter ökonomischen Aspekten nachteilig. Sie stehen dem Wunsch nach einer kostengünstigen, möglichst wirtschaftlichen Überprüfung mechanischer Dichtungen entgegen.

Ausgehend von diesem Stand der Technik, ist es eine Aufgabe der Erfindung, ein Verfahren zum Überwachen des Zustands einer mechanischen Dichtung in einer mit einem rotierenden Teil versehenen Vorrichtung bereitzustellen, welches basierend auf Messungen der Schallemission der Dichtung eine kostengünstige und zuverlässige Beurteilung des Gleitzustandes der Dichtung ermöglicht. Mit dem Verfahren soll eine ständige und einfache Überwachung des Zustands der Dichtung während dem Betrieb der Vorrichtung durchführbar sein. Ferner soll das Verfahren insbesondere auch unter variablen Betriebszuständen der Vorrichtung eine zuverlässige Beurteilung des Zustands der Dichtung ermöglichen. Im speziellen ist es eine Aufgabe der Erfindung, ein solches kostengünstiges und zuverlässiges Verfahren für die Überwachung des Zustands einer mechanischen Dichtung in einer Pumpe zur Förderung eines Fluids vorzuschlagen. Auch hier soll das Verfahren insbesondere unter variablen Betriebszuständen der Pumpe eine zuverlässige Beurteilung des Gleitzustands der Dichtung ermöglichen.

Das diese Aufgaben lösende Verfahren zum Überwachen des Zustands einer mechanischen Dichtung in einer mit einem rotierenden Teil versehenen Vorrichtung, insbesondere in einer Pumpe zur Förderung eines Fluids, die eine rotierende Welle aufweist, ist durch die Merkmale des unabhängigen Anspruchs 1 gekennzeichnet. Bei dem erfindungsgemässen Verfahren wird also mittels eines Schallsensors die Schallemission der Dichtung im Betriebszustand der Vorrichtung in Form analoger akustischer Signale ständig zu diskreten Zeiten erfasst. Aus den akustischen Signalen wird zumindest ein statistischer Kennwert gewonnen, der zur Beurteilung des Gleitzustands der Dichtung herangezogen wird. Das erfindungsgemässe Verfahren ist insbesondere dadurch gekennzeichnet, dass die analogen akustischen Signale vor der Ermittlung des statistischen Kennwerts in analoge demodulierte Signale umgewandelt werden, deren maximale Frequenz kleiner als etwa 50 kHz, vorzugsweise nicht mehr als etwa 20 kHz, ist.

Durch die erfindungsgemässe Umwandlung der von dem Schallsensor erfassten analogen akustischen Signale in analoge demodulierte Signale, deren maximale Frequenz kleiner als etwa 50 kHz ist, sind für das erfindungsgemässen Verfahren keine technisch aufwendigen und kostenintensiven Hochgeschwindigkeits-A/D-Konverter vonnöten. Vorzugsweise ist die maximale Frequenz der analogen demodulierten Signale nicht mehr als etwa 20 kHz. Somit können für die anschliessende weitere Signalverarbeitung, wie beispielsweise A/D-Wandlung und statistische Auswertung, einfache Standardkomponenten verwendet werden, die an sich aus handelsüblichen Audiosystemen hinlänglich bekannt sind. Dies bedeutet eine erhebliche Kosteneinsparung und macht das erfindungsgemässe Verfahren unter dem Aspekt des benötigten apparativen Aufwands besonders einfach und ökonomisch.

Überraschend ist hierbei die Feststellung, dass die demodulierten analogen Signale, welche im Prinzip einen gegenüber den ursprünglich erfassten akustischen Signalen stark reduzierten Datensatz darstellen, von ihrem Informationsgehalt ausreichend sind, um eine zuverlässige Beurteilung des Gleitzustandes der Dichtung zu ermöglichen.

Vorteilhaft ist weiterhin, dass durch die Umwandlung der akustischen Signale in demodulierte Signale die Menge der anschliessend weiterzuverarbeitenden Daten deutlich reduziert wird. Dadurch verringert sich nämlich die für die Daten benötigte Speicherkapazität, der Rechenaufwand für die Auswertung nimmt deutlich ab, die Verarbeitungszeit verkürzt sich und das Ergebnis der Beurteilung steht wesentlich rascher, quasi on-line, zur Verfügung.

Vorzugsweise wird die Schallemission der Dichtung im Frequenzbereich von etwa 100 kHz bis etwa ein MHz erfasst, weil dieser Bereich besonders günstig und aussagekräftig ist.

Auch ist es vorteilhaft, wenn mittels entsprechender Sensoren ständig zu diskreten Zeiten Betriebsgrössen erfasst werden, wobei zumindest die Eingangstemperatur eines Kühlmediums zum Kühlen der Dichtung sowie die Drehzahl des rotierenden Teils der Vorrichtung, beispielsweise der Welle der Pumpe, als Betriebsgrössen erfasst werden, und die Betriebsgrössen zumindest teilweise zur Beurteilung des Gleitzustands der Dichtung herangezogen werden.

Diese Massnahmen sind besonders vorteilhaft, umden Zustand der Dichtung auch dann zuverlässig zubeurteilen, wenn der Betriebszustand der Vorrichtung bzw. der Pumpe variabel ist, wenn sich also beispielsweise die Drehzahl der Pumpe verändert. Solche Änderungen des Betriebszustandes, wie z. B. Drehzahländerungen, Leistungsänderungen, Temperaturvariationen des Kühlmediums, Änderung des Drucks im zu fördernden Fluid (hoch- oder niederdruckseitig) können nämlich Änderungen in der. Schallemission der Dichtung hervorrufen, ohne dass sich der Gleitzustand der Dichtung verschlechtert hat. Aufgrund der Erfassung solcher Betriebsgrössen bzw. ihrer Änderungen, lassen sich Änderungen der Schallemission der Dichtung, welche auf Änderungen des Betriebszustandes der Vorrichtung bzw. Pumpe basieren, von solchen unterscheiden, die auf eine signifikante Veränderung des Gleitzustands der Dichtung zurückgehen.

Für diese Unterscheidung ist es insbesondere vorteilhaft, dass zumindest die Eingangstemperatur des Kühlmediums zum Kühlen der Dichtung sowie die Drehzahl des rotierenden Teils der Vorrichtung bzw. der Welle der Pumpe als Betriebsgrössen erfasst werden.

Bevorzugt wird die Umwandlung der analogen akustischen Signale in analoge demodulierte Signale mittels eines Spitzenwertdetektors durchgeführt, weil hiermit sichergestellt ist, dass die wesentlichen Extremwerte der akustischen Signale bei der Demodulation erfasst werden.

Auch kann es vorteilhaft sein, neben der Eingangstemperatur ferner die Austrittstemperatur des Kühlmediums zum Kühlen der Dichtung als weitere Betriebsgrösse zu erfassen und zur Beurteilung des Gleitzustands der Dichtung heranzuziehen. Die Kenntnis von Eingangs- und Austrittstemperatur des Kühlmediums ermöglicht nämlich zumindest eine Abschätzung der von der Dichtung erzeugten Wärmemenge. Beispielsweise kann eine deutliche Erhöhung dieser Wärmemenge darauf hindeuten, dass der Schmierfilm zwischen den Dichtungsteilen zumindest unvollständig ist (z. B. bei eventueller Verdampfung) und sich die Dichtung dem Zustand trockener Reibung nähert.

Eine bevorzugte Weiterentwicklung des erfindungsgemässen Verfahrens besteht darin, dass mittels eines Modells, für welches zumindest ein Teil der ermittelten Betriebsgrössen als Eingangsgrössen dienen, zumindest ein Soll-Kennwert für die Schallemmission der Dichtung bestimmt wird, der den aktuellen Betriebszustand der Vorrichtung, beispielsweise der Pumpe, berücksichtigt, und der zur Beurteilung des Gleitzustands der Dichtung herangezogen wird. Mit diesem Modell lässt sich folglich für einen aus den akustischen Signalen gewonnenen Kennwert der ihm entsprechende Soll-Kennwert ermitteln, der angibt, welchen Wert der entsprechende aus den akustischen Signalen ermittelte Kennwert haben soll, wenn der Gleitzustand der Dichtung bei dem aktuellen Betriebszustand im normalen Bereich liegt. Der Soll-Kennwert stellt somit eine Art Referenz dar, welche typisch für den normalen Gleitzustand ist und welche zusätzlich den aktuellen Betriebszustand der Vorrichtung bzw. der Pumpe berücksichtigt. Dieses Modell bringt den Vorteil mit sich, dass bei der Beurteilung des Gleitzustands der Dichtung der aktuelle Betriebszustand noch genauer berücksichtigt werden kann.

Als weitere Betriebsgrössen können bei dem erfindungsgemässen Verfahren ferner z. B. eine oder mehrere der folgenden Messgrössen ermittelt werden: die Temperatur des Gehäuses der Vorrichtung, beispielsweise der Pumpe, die Temperatur des Fluids, die Leistung der Vorrichtung, die Fördermenge der Pumpe, der niederund/oder hochdruckseitige Druck in dem Fluid.

Weitere vorteilhafte Massnahmen und bevorzugte Verfahrensausgestaltungen ergeben sich aus den abhängigen Ansprüchen.

Im folgenden wird die Erfindung anhand von Beispielen und anhand der Zeichnung näher erläutert. In der schematischen, nicht massstäblichen Zeichnung zeigen:

Fig. 1 die wesentlichen Teile einer Pumpe mit einer mechanischen Dichtung in einer stark schematischen Schnittdarstellung,

Fig. 2 eine Blockdarstellung zur Veranschaulichung eines Ausführungsbeispiels des erfindungsgemässen Verfahrens, und

Fig. 3 ein Diagramm zur Erläuterung einer Weiterentwicklung des Ausführungsbeispiels des erfindungsgemässen Verfahrens.

Im folgenden wird das erfindungsgemässe Verfahren mit beispielhaftem Charakter unter Bezugnahme auf solche Anwendungen erläutert, bei dem die zu überwachende mechanische Dichtung Teil einer Pumpe zur Förderung eines Fluids ist. Es versteht sich, dass die Erfindung nicht auf solche Fälle beschränkt ist. Die folgenden Erläuterungen gelten in sinngemäss gleicher Weise ganz allgemein für die Überwachung des Zustands einer mechanischen Dichtung in einer Vorrichtung, die mit einem rotierenden Teil versehen ist, wobei die mechanische Dichtung eine dichtende Verbindung zwischen dem rotierenden Teil der Vorrichtung und einer nicht rotierenden bzw. mit einer anderen Drehzahl rotierenden Komponente der Vorrichtung bildet. Solche Vorrichtungen können beispielsweise Strömungsmaschinen, wie z. B. Turbinen, Gebläse, Verdichter oder auch Antriebsvorrichtungen mit rotierenden Wellen, z. B. Motoren, sein. Typischerweise sind solche mechanischen Dichtungen zweiteilig ausgestaltet, wobei der eine Teil drehfest mit dem rotierenden Teil der Vorrichtung verbunden ist und der andere Teil mit einer nicht rotierenden bzw. mit einer anderen Drehzahl rotierenden Komponente der Vorrichtung, sodass diese beiden Teile im Betrieb der Vorrichtung aneinander gleiten.

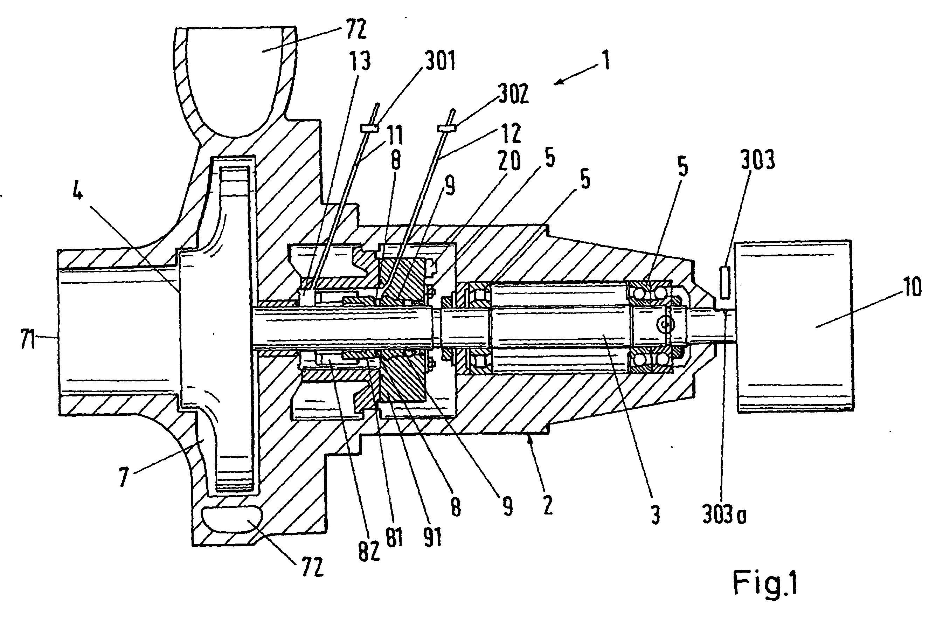

Fig. 1 zeigt in einer stark schematischen Schnittdarstellung die wesentlichen Teile einer Pumpe, die im folgenden als repräsentatives Beispiel für eine mit einem rotierenden Teil versehene Vorrichtung dient. Die Pumpe ist gesamthaft mit dem Bezugszeichen 1 versehen. Sie hat ein Pumpengehäuse 2, in dessen Innenraum eine Pumpenkammer 7 vorgesehen ist, sowie eine Welle 3, die ein in der Pumpenkammer 7 angeordnetes Pumpenrad 4 zur Förderung eines Fluids antreibt. Die Welle 3 ist in mehreren Lagereinrichtungen 5 im Innern des Pumpengehäuses 2 gelagert und wird von einem Motor 10 angetrieben. Im Betrieb wird das Fluid durch eine Ansaugöffnung 71 in den Pumpenraum 7 gesaugt und verlässt diesen durch einen Auslass, der in diesem Beispiel als ein Schneckengang 72 ausgestaltet ist. Die Welle 3 ist im Innern des Pumpengehäuses 2 mit einer mechanischen Dichtung versehen, welche die Pumpenkammer 7 gegen den Aussenraum abdichtet.

Die mechanische Dichtung umfasst einen Gleitring 8 sowie einen Stator 9, die beide jeweils die Welle 3 umgeben. Der Gleitring 8 und der Stator 9 bilden die beiden im Betrieb aneinander gleitenden Teile der mechanischen Dichtung. Der Gleitring 8 ist in einer Gleitringfassung 81 fixiert, welche in axialer Richtung der Welle 3 federbelastet und drehfest in einem Gleitringhalter 82 gelagert ist. Durch die Federbelastung in axialer Richtung wird der Gleitring 8 gegen den Stator 9 gedrückt. Der Gleitringhalter 82 ist fest mit der Welle 3 verbunden, beispielsweise auf diese aufgeschrumpft, sodass sich bei einer Rotation der Welle 3 der Gleitringhalter 82, die Gleitringfassung 81 und der Gleitring 8 mit drehen. Der Stator 9 ist fest mit einer Halterung 91 verbunden, welche bezüglich des Pumpengehäuses 2 fixiert ist.

Beim Betrieb der Pumpe 1 werden der Gleitring 8 und der Stator 9 der mechanischen Dichtung mittels eines Kühlmediums gekühlt, das gleichzeitig als Schmiermittel zwischen dem Gleitring 8 und dem Stator 9 dient. Dieses Kühlmedium kann identisch mit dem zu fördernden Fluid sein und beispielsweise aus der Pumpenkammer 7 zu der Dichtung gelangen. Es kann aber auch ein von dem zu fördernden Fluid verschiedenes Kühlmedium verwendet werden. Bei der Ausgestaltung der Pumpe 1 gemäss der Darstellung in Fig. 1 ist eine separate Zuführleitung 12 und eine separate Abführleitung 11 für das Kühlmedium vorgesehen, die jeweils den Aussenraum der Pumpe 1 mit einem Kühlraum 13 verbinden, der sich im Innern des Pumpengehäuses 2 befindet und die mechanische Dichtung im wesentlichen umschliesst. Das Kühlmedium gelangt durch die Zuführleitung 12 in den Kühlraum 13 im Pumpengehäuse 2, kontaktiert dort die mechanische Dichtung und verlässt den Kühlraum 13 durch die Abführleitung 11.

An der Halterung 91 im Innern des Pumpengehäuses 2 ist ein Schallsensor 20 angeordnet, der die Schallemission der mechanischen Dichtung im Betriebszustand der Pumpe 1 im Frequenzbereich von z. B. etwa 100 kHz bis etwa ein MHz in Form analoger akustischer Signale erfasst. Es ist bekannt, beispielsweise aus der bereits erwähnten DE-C-37 07 524, dass sich dieser Frequenzbereich besonders gut eignet, um den Gleitzustand der mechanischen Dichtung anhand ihrer Schallemission zu überwachen. Der Schallsensor 20 befindet sich in unmittelbarer Nähe der mechanischen Dichtung, um den von ihr emittierten Schall möglichst störungsfrei zu erfassen. Der Schallsensor 20 hat jedoch keinen direkten körperlichen Kontakt mit dem Gleitring 8 oder dem Stator 9, weil ein direkter Kontakt - wenn überhaupt - nur unter ganz erheblichem Aufwand realisierbar wäre. Natürlich kann der Schallsensor auch an anderen Stellen als in Fig. 1 gezeigt angeordnet sein, z. B. an einer inneren oder äusseren Wandung des Pumpengehäuses 2.

Ferner sind noch weitere Sensoren 301, 302, 303 vorgesehen, mit welchen Betriebsgrössen der Pumpe 1 erfasst werden können. Mit dem Begriff "Betriebsgrössen" sind dabei solche unmittelbar oder mittelbar erfassbaren Grössen gemeint, die der Charakterisierung des Betriebszustands der Vorrichtung bzw. der Pumpe 1 dienlich sind. Im konkreten Fall der Pumpe umfasst der Begriff Betriebsgrösse beispielsweise die folgenden Grössen: Drehzahl der Welle 3, Eingangs- und Austrittstemperatur des Kühlmediums, Temperatur des Pumpengehäuses 2, Temperatur des zu fördernden Fluids, Leistung und Fördermenge der Pumpe 1, nieder- und hochdruckseitiger Druck im Fluid, Durchflussmenge und -geschwindigkeit des Kühlmediums, Druck des Kühlmediums im Kühlraum 13, Wärmekapazität des Kühlmediums. Prinzipiell sind alle diese Betriebsgrössen und eventuell noch weitere zur Charakterisierung des Betriebszustands der Pumpe 1 geeignet.

Gemäss einem bevorzugten Ausführungsbeispiel der Erfindung werden zumindest die Eingangstemperatur des Kühlmediums sowie die Drehzahl des rotierenden Teils der Vorrichtung bzw. der Welle 3 der Pumpe 1 als Betriebsgrössen erfasst und zur Beurteilung des Gleitzustands der Dichtung herangezogen. Die Erfassung der Betriebsgrössen erfolgt beispielsweise einmal pro Minute.

In dem in Fig. 1 gezeigten Beispiel sind zur Erfassung der Betriebsgrössen ein Eingangstemperatursensor 302, eine Austrittstemperatursensor 301 zur Messung der Eingangstemperatur respektive der Austrittstemperatur des Kühlmediums vorgesehen, sowie ein Drehzahlsensor 303 zur Bestimmung der Drehzahl der Welle 3. Die Eingangstemperatur des Kühlmediums ist diejenige Temperatur, die das Kühlmedium aufweist, bevor es in den Kühlraum 13 gelangt, die Austrittstemperatur diejenige, die das Kühlmedium nach Verlassen des Kühlraums 13 aufweist. Zur Drehzahlbestimmung kann beispielsweise in an sich bekannter Art eine Markierung 303a auf der Welle 3 vorgesehen sein, die jedesmal, wenn sie den Drehzahlsensor 303 passiert, in diesem einen Impuls auslöst.

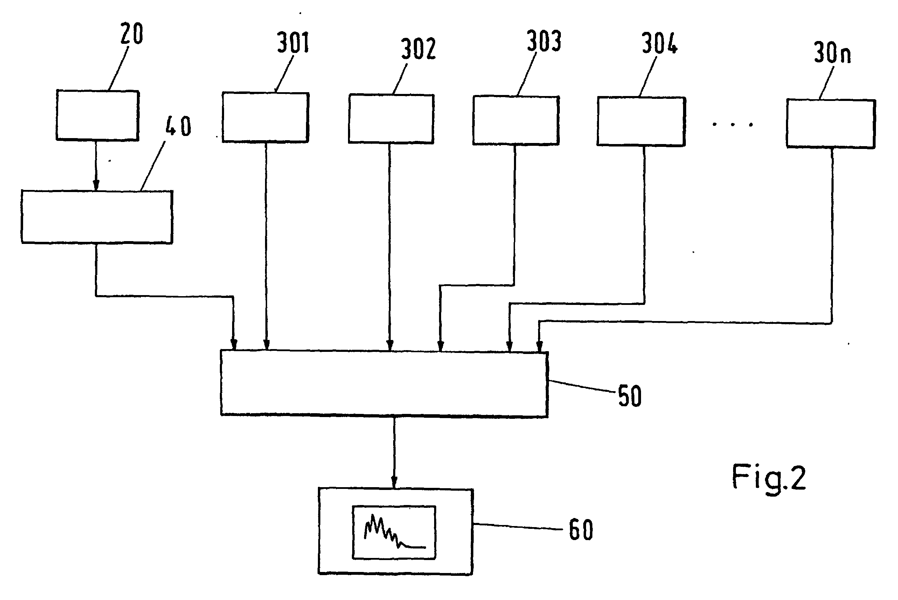

Fig. 2 zeigt eine Blockdarstellung zur Veranschaulichung eines Ausführungsbeispiels des erfindungsgemässen Verfahrens. Der Schallsensor 20 erfasst die von den aneinander gleitenden Flächen der mechanischen Dichtung herrührende Schallemission in Form analoger akustischer Signale, die eine Bandbreite von etwa einem MHz aufweisen. Diese analogen akustischen Signale werden einer Demodulationseinrichtung 40 zugeführt, welche die akustischen Signale in analoge demodulierte Signale umwandelt, deren maximale Frequenz kleiner als etwa 50 kHz ist. Die analogen demodulierten Signale werden dann einer Rechen- und Auswerteeinrichtung 50 zugeführt, wo sie zunächst mittels eines A/D-Wandlers (Analog/Digital-Wandler) in digitale Signale transformiert werden, die für die weitere Verarbeitung gespeichert werden. Vorzugsweise wird die Umwandlung der analogen akustischen Signale in analoge demodulierte Signale mittels eines Spitzenwertdetektors durchgeführt. Dieser bildet im wesentlichen die Umhüllende der hochfrequenten akustischen Signale, sodass der hochfrequente - also zeitlich rasch veränderliche - Anteil der akustischen Signale quasi ausgefiltert wird. Durch diese Art der Demodulation ist sichergestellt, dass die wesentlichen Extremwerte der akustischen Signale bei der Demodulation erfasst werden und die diesbezügliche Information in den analogen demodulierten Signalen enthalten ist. Die maximale Frequenz der demodulierten Signale ist dabei vorgebbar. Sie ist kleiner als etwa 50 kHz und vorzugsweise nicht mehr als 20 kHz, beispielsweise 10 kHz, weil somit die anschliessende Weiterverarbeitung der demodulierten Signale mittels Standardkomponenten durchführbar ist, wie sie aus der Technik handelsüblicher Audiosysteme hinreichend bekannt sind. So kann beispielsweise bei einer Begrenzung der maximalen Frequenz der demodulierten Signale auf etwa 10 kHz für die anschliessende Digitalisierung ein Standard-A/D-Wandler mit einer Digitalisierungsrate von beispielsweise 25 kHz verwendet werden, ohne dass bei der Digitalisierung Fehler auftreten. Überraschend ist hierbei die Feststellung, dass trotz der relativ starken Einschränkung der demodulierten Signale bezüglich ihrer Frequenz ihr Informationsgehalt ausreichend ist, um eine zuverlässige Beurteilung des Gleitzustands der Dichtung zu ermöglichen.

Die von dem Eingangstemperatursensor 302, dem Austrittstemperatursensor 301 und dem Drehzahlsensor 303 kontinuierlich erfassten Betriebsgrössen werden ebenfalls der Rechen- und Auswerteeinrichtung 50 zugeführt und dort als digitale Grössen gespeichert. Natürlich können auch noch weitere Messgrössen als Betriebsgrössen, wie sie beispielsweise weiter vorne erwähnt sind, mittels entsprechender Sensoren 304-30n ermittelt und der Rechen-und Auswerteeinrichtung 50 zugeführt werden. Die Umwandlung der Betriebsgrössen in digitale Grössen kann z. B. in der Rechen-und Auswerteeinrichtung 50 erfolgen oder es können solche Sensoren verwendet werden, die die entsprechende Betriebsgrösse bereits in digitaler Form liefern.

Die Messung der Schallemission der mechanischen Dichtung mittels des Schallsensors 20 erfolgt beispielsweise in Form aufeinander folgender Einzelmessungen, bei denen jeweils die Schallemission als Funktion der Zeit ermittelt wird. Jede solche Einzelmessung erstreckt sich beispielsweise über einen Zeitraum, in welchem die Welle mehrere, z. B. bis zu einigen zehn, Umdrehungen vollführt. Der zeitliche Abstand, in dem aufeinander folgende Einzelmessungen durchgeführt werden, ist je nach Vorrichtung und Betriebszustand wählbar. Ein typischer Wert ist beispielsweise eine Einzelmessung pro Minute. Die zu einer Einzelmessung gehörenden analogen akustischen Signale werden wie vorne erläutert in analoge demodulierte Signale umgewandelt, digitalisiert und als ein digitaler Datensatz in der Rechen- und Auswerteeinrichtung 50 gespeichert. Die von den Sensoren 301-30n während der Einzelmessungen erfassten Betriebsgrössen werden in der Rechen- und Auswerteeinheit 50 in den Einzelmessungen zugeordneter Form gespeichert, das heisst für jeden der digitalen Datensätze, die aus den Einzelmessungen abgeleitet sind, ist bekannt, welche Werte die erfassten Betriebsgrössen während der entsprechenden Einzelmessung hatten. Sollte sich z. B. eine der Betriebsgrössen während einer Einzelmessung wesentlich ändern, so kann dem entsprechenden digitalen Datensatz z. B. der Mittelwert dieser Betriebsgrösse über das Zeitintervall der Einzelmessung zugeordnet werden, oder ein Extremwert, den diese Betriebsgrösse während der Einzelmessung angenommen hat.

Eine wichtige Bedeutung kommt der Erfassung der Drehzahl als Betriebsgrösse zu. Arbeitet die Vorrichtung bzw. die Pumpe nämlich nicht mit konstanter Drehzahl, so können Änderungen der Drehzahl deutliche Änderungen in der Schallemission der mechanischen Dichtung bewirken, ohne dass sich der Gleitzustand der Dichtung merklich verschlechtert hat. Um derart verursachte Änderungen in der Schallemission nicht fälschlicherweise als einen abnormalen Gleitzustand zu beurteilen, muss somit die momentane Drehzahl, bei der die Schallemission ermittelt wird, als Betriebsgrösse bekannt sein. Zusätzlich kann die Messung der Drehzahl als Triggersignal verwendet werden, das für die Auswertung der digitalen Datensätze vorteilhaft ist. So ist es beispielsweise anhand der Drehzahlmessung möglich, eine Einzelmessung, die sich typischerweise zeitlich über mehrere Umdrehungen der Welle 3 erstreckt, bzw. den zugehörigen digitalen Datensatz derart in einzelne Zeitabschnitte einzuteilen, dass jeder Zeitabschnitt einer Umdrehung der Welle 3 entspricht. Somit lässt sich im Prinzip die Zeitabhängigkeit der Einzelmessung bzw. des zugehörigen digitalen Datensatzes in eine Winkelabhängigkeit transformieren. Tritt z. B. in einem solchen Zeitabschnitt, der einer Umdrehung der Welle entspricht, eine Spitze in der Schallemission auf, so kann festgestellt werden, ob diese Spitze auch bei den folgenden Umdrehungen zur gleichen Zeit, das heisst bei gleicher relativer Lage der beiden aneinander gleitenden Flächen der Dichtung zueinander, wiederum auftritt. Hierdurch lassen sich periodisch auftretende Signale, wie sie z. B. durch Rillen in den Gleitflächen verursacht werden können, von nicht-periodischen, wie sie z. B. durch Ausbrechen kleiner Partikel aus den Gleitflächen verursacht werden können, unterscheiden.

Auch der Erfassung der Eingangstemperatur des Kühlmediums kommt eine wichtige Bedeutung zu, denn sie beeinflusst die Temperatur der mechanischen Dichtung, die wiederum einen Einfluss auf die Schallemission der Dichtung hat. Die Eintrittstemperatur des Kühlmediums unterliegt häufig Schwankungen, die sich auf die Schallemission der Dichtung auswirken können. Deshalb ist es wichtig, dass auch die Eingangstemperatur des Kühlmediums als Betriebsgrösse erfasst wird. Hierdurch erhöht sich die Zuverlässigkeit der Berurteilung des Gleitzustands der Dichtung.

Mittels der aus den analogen demodulierten Signalen bestimmten digitalen Datensätze wird in der Rechen- und Auswerteeinrichtung 50 zumindest ein statistischer Kennwert gewonnen, der zur Beurteilung des Gleitzustands der Dichtung herangezogen wird. Für die Art der statistischen Auswertung der digitalen Datensätze sowie für die Art des statistischen Kennwerts gibt es zahlreiche Möglichkeiten, von denen im folgenden mit beispielhaftem Charakter einige erwähnt werden. Es ist beispielsweise möglich, jeden der digitalen Datensätze als Ganzes für sich statistisch auszuwerten. Ferner können einige der digitalen Datensätze zunächst zusammengefasst und dann ausgewertet werden. Insbesondere ist es auch möglich, wie bereits vorne erwähnt, einen digitalen Datensatz derart in Zeitabschnitte aufzuteilen, dass jeder Zeitabschnitt einer Umdrehung der Welle 3 entspricht, die zu den einzelnen Zeitabschnitten gehörenden Signale aufzuaddieren, und das sich daraus ergebende Zeitsignal, welches somit zeitlich einer Umdrehung der Welle 3 entspricht, auszuwerten. Ein solches Zeitsignal wird im folgenden als Umdrehungssignal bezeichnet. Als statistische Kennwerte, die mittels der Auswertung gewonnen werden, eignen sich z. B. der zeitliche Mittelwert eines digitalen Datensatzes bzw. einer Zusammenfassung mehrerer digitaler Datensätze bzw. eines Umdrehungssignals, der Effektivwert, der RMS-Wert (root-mean-square-Wert), der maximale oder minimale Spitzenwert, die Schiefe, die Kurtosis, Burst-Faktoren, Crest-Faktoren, die Zählrate wie oft ein vorgebbarer Grenzwert überschritten wird, oder andere an sich bekannte statistische Grössen. Der oder die statistischen Kennwerte werden anschliessend an eine Ausgabeeinheit 60 weitergeleitet und dort angezeigt und/oder aufgezeichnet bzw. gespeichert. Tritt nun im Verlauf des Betriebs der Pumpe an einer oder mehreren der statistischen Kennwerte eine signifikante Änderung auf, so wird zunächst anhand der ermittelten Betriebsgrössen überprüft, ob diese Änderung durch eine Änderung des Betriebszustands der Pumpe, z. B. Drehzahländerung oder Änderung der Eintrittstemperatur des Kühlmediums, verursacht sein kann. Falls dies nicht in Frage kommt bzw. falls zumindest einer der Kennwerte einen aus Eichmessungen ermittelten Schwellenwert überschreitet, so wird der Gleitzustand der Dichtung als kritisch oder schlecht beurteilt und es können z. B. rechtzeitig Gegenmassnahmen getroffen werden, um einen dauerhaften Schaden der mechanischen Dichtung zu verhindern. Es können auch zwei unterschiedliche Schwellenwerte vorgesehen sein, wobei dann der Gleitzustand der Dichtung als normal beurteilt wird, wenn der Kennwert den ersten Schwellenwert nicht überschreitet; als kritisch beurteilt wird, wenn der Kennwert zwischen dem ersten und dem zweiten Schwellenwert liegt, und als schlecht beurteilt wird, wenn der Kennwert den zweiten Schwellenwert überschreitet.

Es ist vorteilhaft, die analogen demodulierten Daten, bzw. die entsprechenden digitalen Datensätze auch im Frequenzraum auszuwerten und daraus zumindest einen spektralen Kennwert zu gewinnen, der zur Beurteilung des Gleitzustands der Dichtung herangezogen wird. Die Transformation der Daten vom Zeit- in den Frequenzraum kann beispielsweise mittels Fourier-Transformation, insbesondere mittels Fast-Fourier-Transformation (FFT) erfolgen. Auch hier gibt es mehrere Möglichkeiten zur Ermittelung eines oder mehrerer spektraler Kennwerte. So können. beispielsweise die frequenzabhängigen Signale in vorgebbaren Frequenzbändern bezüglich ihrer maximalen, gemittelten oder gesamten Intensität bzw. Energie analysiert werden und beispielsweise die gesamte, die gemittelte oder die maximale Bandenergie oder die maximale Intensität im Frequenzband als spektrale Kennwerte verwendet werden. Auch können die vorne erwähnten Umdrehungssignale in den Frequenzraum transformiert werden, woraus sich sogenannte Ordnungsspektren ergeben. Anhand dieser Ordnungsspektren lassen sich beispielsweise periodisch auftretende Signale von solchen unterscheiden, die sporadisch auftreten. vorzugsweise wird zumindest ein statistischer Kennwert und ein spektraler Kennwert sowie zumindest ein Teil der Betriebsgrössen zur Beurteilung des Gleitzustands der Dichtung herangezogen, um die Zuverlässigkeit der Beurteilung noch zu erhöhen. Die Beurteilung anhand der spektralen Kennwerte erfolgt in sinngemäss gleicher Weise wie die anhand der statistischen Kennwerte durchgeführte.

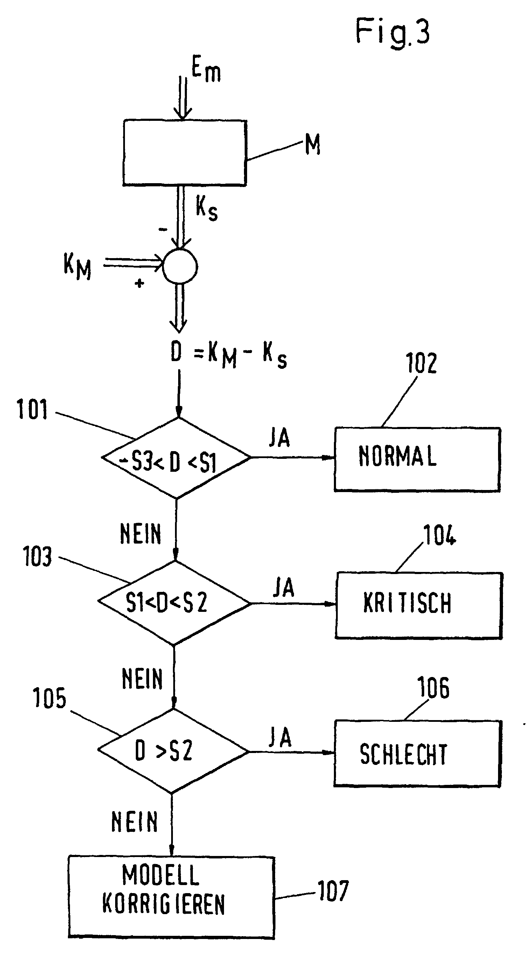

Eine Weiterentwicklung des erfindungsgemässen Verfahrens besteht darin, dass mittels eines Modells M (siehe Fig. 3), für welches zumindest ein Teil der ermittelten Betriebsgrössen als Eingangsgrössen $E_m$ dienen, zumindest ein Soll-Kennwert $K_S$ für die Schallemission der Dichtung bestimmt wird, der den aktuellen Betriebszustand der Vorrichtung bzw. der Pumpe berücksichtigt und der zur Beurteilung des Gleitzustands der Dichtung herangezogen wird. Im folgenden wird der Einfachheit halber und weil es für das Verständnis ausreichend ist, beispielhaft angenommen, dass als Eingangsgrössen $E_m$ für das Modell M die drei Betriebsgrössen Eingangs- und Austrittstemperatur des Kühlmediums sowie Drehzahl verwendet werden. Mit Hilfe des Modells M wird nun für einen oder mehrere vorgebbare statistische und/oder spektrale Kennwerte jeweils der entsprechende Soll-Kennwert $K_S$ berechnet. Die Darstellung in Fig. 3 beschränkt sich aus Gründen der bessern Übersicht auf nur einen Soll-Kennwert $K_S$, der einem aus den akustischen Signalen gewonnenen statistischen oder spektralen Kennwert $K_M$ entspricht. Natürlich können auch für mehrere aus den Messungen gewonnene Kennwerte entsprechende Soll-Kennwerte mit Hilfe des Modells M berechnet werden.

Der Soll-Kennwert $K_S$ ist ein Mass für denjenigen Wert, den der statistische oder spektrale Kennwert $K_M$ haben sollte, falls sich die mechanische Dichtung für den aktuellen Betriebszustand im normalen Gleitzustand befindet. Vorzugsweise wird die Differenz $D = K_M - K_S$ aus dem statistischen oder spektralen Kennwert $K_M$ und dem ihm entsprechenden Soll-Kennwert $K_S$ als Kriterium für die Beurteilung des Gleitzustandes der Dichtung herangezogen. Befindet sich die Dichtung im normalen Gleitzustand, so ist diese Differenz D zumindest in der Nähe von Null. Überschreitet die Differenz D zumindest für einen der Kennwerte eine vorgebbare Schwelle, so ist der Gleitzustand der Dichtung als abnormal zu bewerten.

Vorzugsweise ist diese Schwelle mehrstufig. Zunächst wird im Schritt 101 (Fig. 3) überprüft, ob die Differenz D kleiner als ein erster Schwellenwert S1 und grösser als -S3 ist, wobei S3 eine positive Konstante ist, die als Schwellenwert für die Gültigkeit des Modells M dient. Falls ja, wird der Gleitzustand als normal bewertet, wie in Fig. 3 durch die Box mit dem Bezugszeichen 102 angedeutet. Liegt dagegen die Differenz $D = K_M - K_S$ nicht zwischen -S3 und S1, so wird im Schritt 103 überprüft, ob die Differenz D grösser als S1 und kleiner als ein zweiter Schwellenwert S2 ist. Ist dem so, also S1 < D < S2, so resultiert daraus eine Vorwarnung 104; der Gleitzustand ist als kritisch zu beurteilen, aber noch nicht als schlecht. Ein solcher kritischer Gleitzustand kann beispielsweise daraus resultieren, dass kleinere Partikel aus den aneinander gleitenden Flächen der Dichtung herausbrechen oder dass der Schmierfilm Störungen aufweist. Ist die Differenz D auch nicht kleiner als der zweite Schwellenwert S2, so wird im Schritt 105 geprüft, ob die Differenz D grösser ist als S2. Falls ja, ist der Gleitzustand als schlecht zu beurteilen (Box 106 in Fig. 3) und es sind in der Regel Gegenmassnahmen nötig, z. B. Erhöhung der Kühlleistung durch das Kühlmedium. Ergibt sich im Schritt 105, dass die Differenz D nicht grösser als S2 ist, so ist die Differenz D kleiner als -S3. Dies ist ein Indiez dafür, dass das Modell M nicht genügend gut ist und korrigiert bzw. neu bestimmt werden muss (Schritt 107).

Es ist insbesondere vorteilhaft, wenn die Differenz aus der Eingangstemperatur und der Austrittstemperatur des Kühlmediums in das Modell M zur Bestimmung des Soll-Kennwerts $K_S$ eingeht, weil diese ein Mass für die von den aneinander gleitenden Flächen der Dichtung erzeugte Wärmemenge darstellt.

Bevorzugt, weil besonders einfach und trotzdem effizient, ist das Modell M zur Bestimmung des Soll-Kennwerts $K_S$ linear in den Eingangsgrössen $E_m$. Für das vorne erwähnte Beispiel lässt sich dann der Soll-Kennwert nach einer Gleichung der Form

$$K_S = \sum_i a_i \cdot T_i + b \cdot \omega$$

berechnen, wobei i ein Laufindex ist, der die verschiedenen als Betriebsgrössen erfassten Temperaturen $T_i$ indiziert, ω die Drehzahl bezeichnet und $a_i$ sowie b Modellkoeffizienten sind. Im konkreten Beispiel ist also i=1 oder 2, T1 die Eingangstemperatur und T2 die Austrittstemperatur des Kühlmediums. Die Modellkoeffizienten $a_i$ und b werden bei normalem Gleitzustand der Dichtung bestimmt. Diese Bestimmung kann beispielsweise erfolgen, wenn eine neue Dichtung in Betrieb genommen wurde und der typische Einlaufvorgang abgeschlossen ist. Es versteht sich, dass die Modellkoeffizienten $a_i$ und b je nach der spezifischen Art des statistischen oder spektralen Kennwerts, für den der Soll-Kennwert ermittelt werden soll, angepasst werden.

Somit lässt sich mit Hilfe des Modells M für jeden der aus den akustischen Signalen ermittelten statistischen oder spektralen Kennwerte ein entsprechender Soll-Kennwert ermitteln, der eine Referenz darstellt, die repräsentativ für den normalen Gleitzustand der Dichtung unter dem aktuellen Betriebszustand ist. Dieses Modell M bietet also den grossen Vorteil, dass die Grenzwerte, bei deren Überschreitung der Gleitzustand als kritisch oder schlecht zu beurteilen ist, nicht starr sind, sondern über die Soll-Kennwerte an den jeweils aktuellen Betriebszustand der Vorrichtung bzw. der Pumpe angepasst sind. Hieraus resultiert eine deutliche Erhöhung der Zuverlässigkeit der Beurteilung des Gleitzustands der Dichtung, insbesondere unter variablen Betriebszuständen.

Es versteht sich, dass auch noch weitere Betriebsgrössen, wie sie beispielsweise vorne erwähnt sind, als Eingangsgrössen $E_m$ für das Modell M verwendet werden können. Die Modellrechnungen können beispielsweise in der Rechen- und Auswerteeinrichtung 50 erfolgen.

Die direkt anhand der statistischen und/oder spektralen Kennwerte durchgeführte Beurteilung des Gleitzustandes der Dichtung wird vorzugsweise mit der aus dem Modell M resultierenden Beurteilung im Sinne einer logischen Oder-Operation verknüpft, d. h. sobald nur eine dieser Beurteilungen den Gleitzustand als kritisch oder schlecht identifiziert, so lautet auch die Gesamtbeurteilung des Gleitzustands kritisch oder schlecht. Diese Gesamtbeurteilung kann mittels der Ausgabeeinheit 60 (Fig.2) dargestellt werden.

**Patentansprüche**

1. Verfahren zum Überwachen des Zustands einer mechanischen Dichtung in einer mit einem rotierenden Teil versehenen Vorrichtung, insbesondere in einer Pumpe (1) zur Förderung eines Fluids, die eine rotierende Welle (3) aufweist, bei welchem Verfahren mittels eines Schallsensors (20) die Schallemission der Dichtung im Betriebszustand der Vorrichtung in Form analoger akustischer Signale ständig zu diskreten Zeiten erfasst wird, bei welchem aus den akustischen Signalen zumindest ein statistischer Kennwert gewonnen wird und der statistische Kennwert zur Beurteilung des Gleitzustandes der Dichtung herangezogen wird, **dadurch gekennzeichnet, dass** die analogen akustischen Signale vor der Ermittlung des statistischen Kennwerts in analoge demodulierte Signale umgewandelt werden, deren maximale Frequenz kleiner als etwa 50 kHz, vorzugsweise nicht mehr als etwa 20 kHz, ist.

2. Verfahren nach Anspruch 1, wobei die Schallemission der Dichtung im Frequenzbereich von etwa 100 kHz bis etwa ein MHz erfasst wird.

3. Verfahren nach einem der vorangehenden Ansprüche, bei welchem mittels entsprechender Sensoren (301-30n) ständig zu diskreten Zeiten Betriebsgrössen erfasst werden, wobei zumindest die Eingangstemperatur eines Kühlmediums zum Kühlen der Dichtung sowie die Drehzahl des rotierenden Teils der Vorrichtung, beispielsweise der Welle (3) der Pumpe (1), als Betriebsgrössen erfasst werden, und bei welchem die Betriebsgrössen zumindest teilweise zur Beurteilung des Gleitzustandes der Dichtung herangezogen werden.

4. Verfahren nach einem der vorangehenden Ansprüche, wobei die Umwandlung der analogen akustischen Signale in analoge demodulierte Signale mittels eines Spitzenwertdetektors durchgeführt wird.

5. Verfahren nach einem der vorangehenden Ansprüche, wobei aus den analogen demodulierten Signalen zumindest ein spektraler Kennwert gewonnen wird und der spektrale Kennwert zur Beurteilung des Gleitzustands der Dichtung herangezogen wird.

**6.** Verfahren nach einem der vorangehenden Ansprüche, wobei ferner die Austrittstemperatur des Kühlmediums zum Kühlen der Dichtung als weitere Betriebsgrösse erfasst und zur Beurteilung des Gleitzustands der Dichtung herangezogen wird.

**7.** Verfahren nach einem der vorangehenden Ansprüche, wobei mittels eines Modells (M), für welches zumindest ein Teil der ermittelten Betriebsgrössen als Eingangsgrössen ($E_m$) dienen, zumindest ein Soll-Kennwert ($K_S$) für die Schallemmission der Dichtung bestimmt wird, der den aktuellen Betriebszustand der Vorrichtung, beispielsweise der Pumpe (1), berücksichtigt, und der zur Beurteilung des Gleitzustands der Dichtung herangezogen wird.

**8.** Verfahren nach Anspruch 7, wobei die Differenz (D) aus dem statistischen oder spektralen Kennwert ($K_M$) und dem ihm entsprechenden Soll-Kennwert ($K_S$) als Kriterium für die Beurteilung des Gleitzustandes der Dichtung herangezogen wird.

**9.** Verfahren nach einem der Ansprüche 7 oder 8, bei welchem die Differenz aus der Eingangstemperatur und der Austrittstemperatur des Kühlmediums in das Modell (M) zur Bestimmungdes Soll-Kennwerts ($K_S$) eingeht.

**10.** Verfahren nach einem der Ansprüche 7-9, bei welchem das Modell (M) zur Bestimmung des Soll-Kennwerts ($K_S$) linear in den Eingangsgrössen ($E_m$) ist.

**11.** Verfahren nach einem der vorangehenden Ansprüche, bei welchem ferner mindestens eine der folgenden Messgrössen als Betriebsgrössen ermittelt werden: die Temperatur des Gehäuses der Vorrichtung, beispielsweise der Pumpe, die Temperatur des Fluids, die Leistung der Vorrichtung, die Fördermenge der Pumpe, der nieder- und/oder hochdruckseitige Druck in dem Fluid.

**Claims**

**1.** Method for monitoring the condition of a mechanical seal in an apparatus provided with a rotating part, in particular in a pump (1) which has a rotating shaft (3) for the forwarding of a fluid, in which method the sound emission of the seal in the operating state of the apparatus is continually measured in the form of analogue acoustic signals at discrete times by means of a sound sensor (20), at least one statistical characteristic value is won from the acoustic signals and the statistical characteristic value is used for the assessment of the sliding condition of the seal, **characterised in that** the analogue acoustic signals are converted prior to the determination of the statistical characteristic value into analogue demodulated signals, the maximum frequency of which is less than about 50 kHz, preferably not more than about 20 kHz.

**2.** Method in accordance with claim 1, wherein the sound emission of the seal is measured in the frequency range from about 100 kHz to about one MHz.

**3.** Method in accordance with one of the preceding claims, wherein operating parameters are continually determined at discrete times by means of corresponding sensors (301-30n), with at least the entry temperature of a coolant for the cooling of the seal as well as the speed of rotation of the rotating part of the apparatus, for example the shaft (3) of the pump (1), being measured as operating parameters, and with the operating parameters being at least partially used for the assessment of the sliding condition of the seal.

**4.** Method in accordance with one of the preceding claims, wherein the conversion of the analogue acoustic signals into analogue demodulated signals is performed by means of a peak value detector.

**5.** Method in accordance with one of the preceding claims, wherein at least one spectral characteristic value is won from the analogue demodulated signals and wherein the spectral characteristic value is used for the assessment of the sliding condition of the seal.

**6.** Method in accordance with one of the preceding claims, with furthermore the exit temperature of the coolant for the cooling of the seal being measured as a further operating parameter and being used for the assessment of the sliding condition of the seal.

**7.** Method in accordance with one of the preceding claims, wherein, by means of a model (M) for which at least some of the operating parameters determined serve as input parameters ($E_m$), at least one desired characteristic value ($K_s$) for the sound emission of the seal is determined which takes account of the current operating state of the apparatus, for example of the pump (1), and which is used for the assessment of the sliding condition of the seal.

**8.** Method in accordance with claim 7, wherein the difference (D) between the spectral characteristic value ($K_M$) and the desired characteristic value ($K_S$) corresponding to it is used as a criterion for the assessment of the sliding condition of the seal.

**9.** Method in accordance with claim 7 or claim 8, wherein the difference between the entry temperature and the exit temperature of the coolant enter into the model (M) for the determination of the desired characteristic value ($K_S$).

10. Method in accordance with one of the claims 7 to 9, wherein the model (M) for the determination of the desired characteristic value ($K_s$) is linear in the input parameters ($E_m$).

11. Method in accordance with one of the preceding claims, wherein at least one of the following measurement values is also determined as an operating parameter: the temperature of the housing of the apparatus, for example of the pump, the temperature of the fluid, the power of the apparatus, the flow rate of the pump, the pressure in the fluid on the low pressure side and/or high pressure side.

**Revendications**

1. Procédé pour contrôler l'état d'une garniture d'étanchéité mécanique dans un dispositif pourvu d'une partie tournante, notamment d'une pompe (1) pour le convoyage d'un fluide, qui présente un arbre tournant (3), procédé dans lequel est détecté au moyen d'un détecteur acoustique (20) l'émission sonore de la garniture d'étanchéité à l'état de fonctionnement du dispositif sous forme de signaux analogiques acoustiques continuellement à des temps discrets, où est obtenue à partir des signaux acoustiques au moins une valeur caractéristique statistique, et la valeur caractéristique statistique est utilisée pour apprécier l'état de glissement de la garniture d'étanchéité, **caractérisé en ce que** les signaux analogiques acoustiques sont transformés avant la détermination de la valeur caractéristique statistique en des signaux analogiques démodulés dont la fréquence maximale est plus petite qu'environ 50 kHz, et de préférence non supérieure à environ 20 kHz.

2. Procédé selon la revendication 1, où l'émission sonore de la garniture d'étanchéité est détectée dans la plage de fréquence d'environ 100 kHz à environ 1 MHz.

3. Procédé selon l'une des revendications précédentes, dans lequel sont détectées au moyen de détecteurs correspondants (30l-30n) continuellement à des temps discrets des grandeurs de fonctionnement, où au moins la température d'entrée d'un milieu de refroidissement, pour le refroidissement de la garniture d'étanchéité, ainsi que le nombre de tours de la partie tournante du dispositif, par exemple de l'arbre (3) de la pompe (1), sont détectés comme grandeurs de fonctionnement, et où les grandeurs de fonctionnement sont utilisées au moins partiellement pour apprécier l'état de glissement de la garniture d'étanchéité.

4. Procédé selon l'une des revendications précédentes, où la transformation des signaux analogiques acoustiques en des signaux analogiques démodulés est exécutée au moyen d'un détecteur de valeurs de pointe.

5. Procédé selon l'une des revendications précédentes, où est obtenue à partir des signaux analogiques démodulés au moins une valeur caractéristique spectrale, et la valeur caractéristique spectrale est utilisée pour apprécier l'état de glissement de la garniture d'étanchéité.

6. Procédé selon l'une des revendications précédentes, où est détectée en outre la température de sortie du milieu de refroidissement pour le refroidissement de la garniture d'étanchéité comme autre grandeur de fonctionnement et est utilisée pour apprécier l'état de glissement de la garniture d'étanchéité.

7. Procédé selon l'une des revendications précédentes, où est définie au moyen d'un modèle (M), pour lequel au moins une partie des grandeurs de fonctionnement déterminées servent de grandeurs d'entrée ($E_m$), au moins une valeur caractéristique de consigne ($K_s$) pour l'émission sonore de la garniture d'étanchéité est déterminée, qui tient compte de l'état de fonctionnement actuel du dispositif, par exemple de la pompe (1), et qui est utilisée pour apprécier l'état de glissement de la garniture d'étanchéité.

8. Procédé selon la revendication 7, où la différence (D) de la valeur caractéristique statistique ou spectrale ($K_M$) et la valeur caractéristique de consigne ($K_s$) correspondant à celle-ci est utilisée comme critère pour apprécier l'état de glissement de la garniture d'étanchéité.

9. Procédé selon l'une des revendications 7 ou 8, où la différence de la température d'entrée et de la température de sortie du milieu de refroidissement entre dans le modèle (M) pour déterminer la valeur caractéristique de consigne ($K_s$).

10. Procédé selon l'une des revendications 7 à 9, où le modèle (M) pour déterminer la valeur caractéristique de consigne ($K_s$) est linéaire dans les grandeurs d'entrée ($E_m$).

11. Procédé selon l'une des revendications précédentes, où sont déterminées en outre au moins l'une des grandeurs de mesure suivantes comme grandeurs de fonctionnement : la température du boîtier du dispositif, par exemple de la pompe, la température du fluide, la puissance du dispositif, la quantité convoyée de la pompe, la pression côté basse pression et/ou côté haute pression dans le fluide.

Fig.1

EP 0 895 010 B1

Fig.2

# Fig.3

$$D = K_M - K_S$$

101 $-S3 < D < S1$ — JA → 102 NORMAL

NEIN

103 $S1 < D < S2$ — JA → 104 KRITISCH

NEIN

105 $D > S2$ — JA → 106 SCHLECHT

NEIN

107 MODELL KORRIGIEREN